# EUROPÄISCHE PATENTSCHRIFT

(11) **EP 2 359 969 B1**
(45) Veröffentlichungstag und Bekanntmachung des Hinweises auf die Patenterteilung: **27.03.2013**
(21) Anmeldenummer: 10001558.5
(22) Anmeldetag: 16.02.2010
(51) Int. Cl.: B23D 45/08, B23D 47/12, B23Q 5/10

(54) **Wirbeltrennvorrichtung**
Vortex separation device
Dispositif de séparation tourbillonant

(43) Veröffentlichungstag der Anmeldung: 24.08.2011
(73) Patentinhaber: Reika GmbH & Co. KG, 58093 Hagen (DE)
(72) Erfinder: Braun, Hans-Jörg, D-58093 Hagen (DE); Martin, Klaus, D-58300 Wetter (DE)
(74) Vertreter: Dörner, Kötter & Kollegen

(56) Entgegenhaltungen:
- EP-A1- 0 490 328
- EP-A2- 1 728 577
- EP-A2- 1 985 397
- DE-B- 1 116 032

## Beschreibung

Die Erfindung betrifft eine Vorrichtung zur spanenden Bearbeitung von rohr-und stangenförmigen Werkstücken im Wirbelverfahren nach dem Oberbegriff des Patentanspruchs 1. Eine derartige Vorrichtung wird vom EP 1 728 577 A offenbart.

Beim Wirbelverfahren handelt es sich um ein spanabhebendes Verfahren, bei dem das Werkzeug das Werkstück spiralwirbelartig umkreist. Die Einschnitttiefe wird durch ein oder mehrere, mit hoher Schnittgeschwindigkeit umlaufende Messer, in einem Arbeitsgang hergestellt. Dabei wälzt sich die durch das Schneidwerkzeug gebildete Innenmantelfläche auf der zylindrischen Außenmantelfläche des zu bearbeitenden Werkstücks ab. Dieser Bewegungsvorgang wird der sich ständig kreisenden Bewegung des Schneidwerkzeugs überlagert.

Das Wirbelverfahren, beispielsweise bekannt aus der EPO 490 328 B1 hat den Vorteil, dass eine Vielzahl von Schneidwerkzeugen, insbesondere Schneidstählen, nebeneinander angeordnet werden können, die bei einem größeren Segmentbereich gleichzeitig in Eingriff mit dem Werkstück stehen. Beim Wirbeltrennen wird dabei ein Wirbelsägewerkzeug mit innenliegender Verzahnung - nachfolgend unter dem Begriff "Sägeblatt" subsumiert - eingesetzt. Die Schneidzähne des Sägeblatts können tangential in das Werkstück eindringen. Aufgrund des Wirbelverfahrens braucht der wirksame Eindringradius des Sägeblatts nur die Wandstärke des Werkstücks zu umfassen. Handelt es sich hierbei um ein Vollmaterial, so muss das Sägeblatt nur bis zum Mittelpunkt des Vollmaterials eindringen, da die weitere Hälfte des Werkstücks durch die Umkreisung des Sägeblatts abgetrennt wird. Derartige Wirbeltrennvorrichtungen werden nachfolgend als "Zirkularsäge" bezeichnet.

Der Einsatz des Wirbelverfahrens zur spanenden Bearbeitung von rohr-und stangenförmigen Werkstücken hat sich bewährt, insbesondere können hierbei die Bearbeitungszeiten deutlich reduziert werden. Kernstück der Wirbelvorrichtung ist das Wirbelaggregat, welches eine Aufnahme für ein Wirbelwerkzeug aufweist. Diese Aufnahme ist drehbar gelagert und mittels eines Antriebsmotors angetrieben. In Bezug auf die Kopplung des Antriebsmotors mit der Aufnahme kommen insbesondere zwei Ausführungen zum Einsatz. Zum einen ist es bekannt, den Antriebsmotor parallel zur Drehachse der Aufnahme anzuordnen und diesen über einen Riemenantrieb mit der Aufnahme zu koppeln. Hierzu ist der Elektromotor relativ groß zu dimensionieren, um die für den Wirbelvorgang benötigten hohen Drehmomente und hohen Drehzahlen zur Verfügung stellen zu können. Dabei ist der Antriebsmotor häufig seitlich am Gehäuse des Wirbelaggregats angeordnet, so dass das Wirbelaggregat einen erheblichen Bauraum beansprucht. Dieses ist insbesondere in Bezug auf den Schwenkwinkel des häufig schräggelagerten Wirbelaggregats nachteilig, da durch den seitlich angeordneten Motor der Winkel begrenzt ist. Weiterhin unterliegt der Riemenantrieb einem mechanischen Verschleiß, was mit einem Leistungsverlust hinsichtlich des tatsächlich übertragenen Drehmoments einhergeht. Zudem ist bei dem bekannten Riemenantrieb nur eine unzulängliche Laufruhe erzielbar.

Weiterhin ist es bekannt, den Antriebsmotor mit seiner Antriebswelle senkrecht zur Drehachse der Aufnahme stehend anzuordnen und über ein Übersetzungs- oder Kegelradgetriebe mit der Aufnahme zu koppeln. Auch hier ist der Antriebsmotor groß zu dimensionieren, um die erforderlichen Drehmomente und Drehzahlungen zur Verfügung stellen zu können. Auch diese Lösung beansprucht einen erheblichen Bauraum und stellt sich im Übrigen als sehr aufwendig im Hinblick auf das einzusetzende Übersetzungs- oder Kegelradgetriebe dar.

Hier will die Erfindung Abhilfe schaffen. Der Erfindung liegt die Aufgabe zugrunde, eine Vorrichtung zur spanenden Bearbeitung von rohr- und stangenförmigen Werkstücken im Wirbelverfahren zu schaffen, bei dem die Baugröße des Wirbelaggregats minimiert ist, bei dem Leistungsverluste hinsichtlich des tatsächlich übertragenen Drehmoments vermieden sind und bei dem eine hohe Luftruhe erzielbar ist. Gemäß der Erfindung wird diese Aufgabe durch die Merkmale des Patentanspruchs 1 gelöst.

Mit der Erfindung ist eine Vorrichtung zur spanenden Bearbeitung von rohr-und stangenförmigen Werkstücken im Wirbelverfahren geschaffen, bei der der Bauraum des Wirbelaggregats minimiert ist und bei der ein Leistungsverlust hinsichtlich des tatsächlich übertragenen Drehmoments vermieden ist. Durch den Einsatz eines elektromagnetischen rotatorischen Direktantriebs ist eine Integration des Antriebs direkt in das Wirbelaggregat erzielt. Dieser Direktantrieb wirkt unmittelbar mit der Aufnahme zusammen; Übertragungsmedien wie Zahnriemen sind nicht erforderlich. Durch die Ausformung des Stators als an dem Gehäuse fest angebrachten Ring mit U-förmigen Querschnitt und die Gestaltung des Rotors als an der Aufnahme angeformten Steg, der innerhalb des U-förmigen Querschnitts des Stators gehäuseseitig gelagert ist, ist ein sehr kompakter Aufbau mit einer sehr geringen Anzahl von Bauteilen ermöglicht. Die Wicklungen des Stators sind an seinem dem Gehäuse gegenüberliegenden Innenschenkel seines U-förmigen Querschnitts über einen großen Durchmesser angeordnet. Dieser große Durchmesser ermöglicht eine relativ große Anzahl von Polen bei gleichzeitiger Beibehaltung der thermischen Belastbarkeit des Antriebs. Da keine mechanischen Übertragungsglieder vorhanden sind, ist zudem eine hohe mechanische Überlastsicherung gegeben, worin eine hohe Betriebssicherheit begründet ist. Dadurch, dass die Lager außerhalb der Wicklungen des Stators angeordnet sind und durch den Luftspalt getrennt sind, besteht nur eine geringe Wärmeübertragung auf die Lager.

In Weiterbildung der Erfindung ist an dem Stator wenigstens ein Kanal zur Durchleitung von Kühlmittel angeordnet. Hierdurch ist eine bessere Kühlung der Wicklung erzielt, wodurch die thermische Belastbarkeit des Antriebs auch bei hochpoliger Anordnung erzielbar ist.

In Ausgestaltung der Erfindung ist an dem Innenschenkel des U-förmigen Querschnitts des Stators wenigstens eine Nut eingebracht, in die ein an der Aufnahme angeformter Führungssteg eingreift. Hierdurch ist eine gute Führung der Aufnahme bewirkt.

In weiterer Ausgestaltung der Erfindung ist der in Form eines an der Aufnahme angeformten Steges gebildete Rotor im Wesentlichen am äußeren Umfang der Aufnahme angeordnet. Hierdurch ist eine Drehmomentübertragung in unmittelbarer Nähe der Schneidkörper des von der Aufnahme aufgenommenen Wirbelwerkzeugs erzielt. Unerwünschte Momentbelastungen an den Kraftfluss umlenkenden Bauteilen sind so vermieden.

In weiterer Ausgestaltung der Erfindung weist der Stator an seiner der Aufnahme zugewandten Seite einen in Richtung der Rotationsachse der Aufnahme gerichteten Vorsprung auf, der sich nahezu bis zum Außenumfang der Aufnahme erstreckt. Hierdurch ist einem Fremdkörpereintrag zwischen Rotor und Stator im Betrieb entgegengewirkt. Zudem kann ein solcher Vorsprung gleichzeitig als Anlage für die Lager zur Lagerung des Rotors an dem gehäuseseitigen Außenschenkel des Stators dienen.

In Weiterbildung der Erfindung umfasst die Aufnahme des Wirbelaggregats Indexierstifte, die mit in dem Wirbelwerkzeug vorhandenen Indexierbohrungen korrespondieren. Hierdurch ist eine lagegerechte Aufnahme des Wirbelwerkzeugs in der Aufnahme ermöglicht.

Andere Weiterbildungen und Ausgestaltungen der Erfindung sind in den übrigen Unteransprüchen angegeben. Ein Ausführungsbeispiel der Erfindung ist in der Zeichnung dargestellt und wird nachfolgend im Einzelnen beschrieben. Es zeigen:

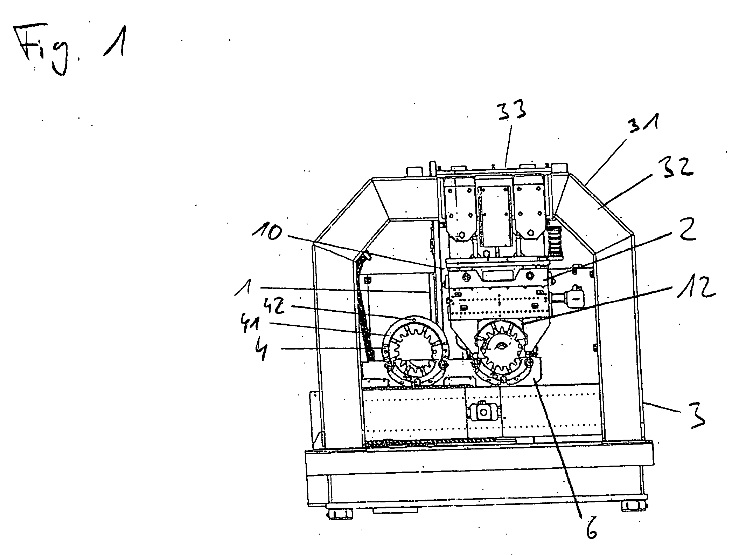

- Fig. 1: die schematische Darstellung einer Zirkularsäge in der Ansicht von hinten und

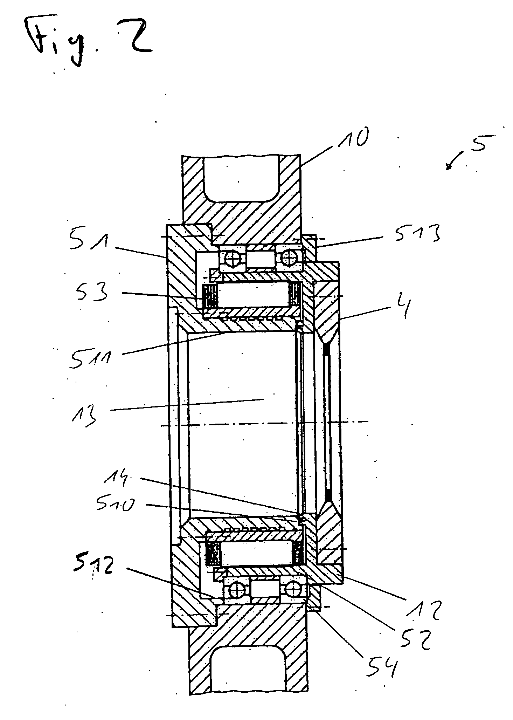

- Fig. 2: die schematische Darstellung des elektromagnetischen rotatorischen Direktantriebs der Zirkularsäge aus Figur 1.

Die als Ausführungsbeispiel gewählte Wirbelvorrichtung ist eine Wirbeltrennvorrichtung, nachfolgend als Zirkularsäge bezeichnet. Sie umfasst ein in einem Gehäuse 10 angeordnetes Wirbelaggregat 1 mit einer Werkstückzuführung sowie einen Abgreifer 2, welche in einem Rahmensystem 3 angeordnet sind. Das Rahmensystem 3 ist dabei im Wesentlichen gebildet aus zwei parallel zueinander angeordneten Portalen 31, 32, die kopfseitig über einen Verbindungsträger 33 miteinander verbunden sind. Dabei ist das Wirbelaggregat 1 an dem Aggregatportal 31 befestigt; das Stützportal 32 dient dem Auflager des Verbindungsträgers 33. An dem Verbindungsträger 33 ist eine Schiene befestigt, an der der Abgreifer 2 verschiebbar angeordnet ist. Im Ausführungsbeispiel weist die Zirkularsäge ein integriertes Werkzeugwechselsystem 6 auf.

Das Wirbelaggregat 1 umfasst eine Werkzeugaufnahme 12 zur Aufnahme eines Sägeblatts 4. Die Werkzeugaufnahme 12 ist im Wesentlichen trichterförmig ausgebildet, wodurch die Spanabfuhr verbessert ist. Umlaufend ihrer kreisförmigen Öffnung ist in der Werkzeugaufnahme 12 ein Anlageflansch zur passgenauen Anlage eines Sägeblatts 4 angeordnet. Zur definierten Lage des Sägeblatts 4 in der Werkzeugaufnahme 12 ist der Anlageflansch mit einem - nicht dargestellten - Indexierstift versehen, welcher in eine in dem Schneidenträgerring 41 eingebrachte Indexierbohrung 42 einführbar ist.

Die Werkzeugaufnahme 12 ist mit einem elektromagnetischen rotatorischen Direktantrieb 5 verbunden. Der Direktantrieb 5 ist im wesentlichen gebildet durch einen an dem Gehäuse 10 des Wirbelaggregats 1 befestigten ringförmigen Stator 51, der einen im wesentlichen U-förmigen Querschnitt aufweist, und einen Rotor 52, der in Form eines ringförmigen und mit - nicht dargestellten - permanenten Magneten versehenen Steges gebildet ist, der an der Werkzeugaufnahme 12 angeformt ist. Die Werkzeugaufnahme 12 ist über den Rotor 52 über Lager 54 innerhalb des Stators 51 drehbar gelagert. Dabei sind die Lager 54 innerhalb des U-förmigen Querschnitts des Stators 51 gehäuseseitig an dem Außenschenkel 512 des Stators 51 angeordnet. Durch diese Anordnung der Lager 54 ist eine Anordnung des Rotors 52 im Wesentlichen am äußeren Umfang der Werkzeugaufnahme 12 möglich. Weiterhin sind an der Werkzeugaufnahme 12 in unmittelbarer Nähe der Durchführung 13 parallel zueinander zwei umlaufend angeformte Stege 14 angeformt, welche in korrespondierende Nuten 510 des Stators 51 eingreifen.

Der dem Gehäuse 10 abgewandte Innenschenkel 511 des U-förmigen Querschnitts des Stators 51 ist mit Wicklungen 53 zur Erzeugung eines elektromagnetischen Feldes versehen. Die Wicklungen 53 sind derart angeordnet, dass zwischen den Wicklungen 53 und dem Rotor 52 nur ein schmaler Luftspalt gebildet ist. An seiner der Werkzeugaufnahme 12 zugewandten Seite weist der Stator 51 einen in Richtung der Rotationsachse der Werkzeugaufnahme 12 gerichteten Vorsprung 513 auf, der sich nahezu bis zum Außenumfang der Werkzeugaufnahme 12 erstreckt. Die dem Gehäuse 10 zugewandter Lagerschale der Lager 54 liegt an dem Vorsprung 513 des Stators 51 an.

Der eingesetzte elektromagnetische rotatorische Direktantrieb ist vorliegend nur mit seinen wesentlichen Bauteilen angegeben. Einzelheiten der Gestaltung derartiger Direktantriebe sind dem Fachmann hinlänglich bekannt. Der besondere Vorteil der erfindungsgemäßen Anordnung des Direktantriebs ergibt sich vor allem aus der einfacheren mechanischen Struktur. Durch den Entfall der zur Leistungsumformung benutzten mechanischen Übertragungselemente ist dieser Direktantrieb spielfrei. Systemgrößen wie Strom, Kraft bzw. Drehmoment und Geschwindigkeit bzw. Drehzahl können direkt erfasst und einem Regelungskonzept einbezogen werden. Dies wirkt sich neben der verbesserten Positioniergenauigkeit auch vereinfachend auf die Regelung dieses Antriebs aus. Ein weiterer Vorteil, der sich durch den Entfall von mechanischen Übertragungselementen ergibt, ist die hiermit verbundene Wartungsfreiheit.

Die zuvor beschriebene Zirkularsäge ist lediglich ein Beispiel einer Vorrichtung zur spanenden Bearbeitung; selbstverständlich ist die vorliegende Erfindung nicht auf Wirbeltrennvorrichtungen beschränkt. Vielmehr erstreckt sich die Erfindung auf sämtliche Vorrichtungen, mit denen mittels Wirbelverfahren eine spanende Bearbeitung von rohr- und stangenförmigen Werkstücken erzielbar ist. Hierzu zählen beispielsweise auch Vorrichtungen zum Gewindewirbeln.

## Patentansprüche

1. Vorrichtung zur spanenden Bearbeitung von rohr- und stangenförmigen Werkstücken im Wirbelverfahren, umfassend ein ein Gehäuse aufweisendes Wirbelaggregat, an dem eine drehbar gelagerte, mit einem Antrieb verbundene Aufnahme für ein innenverzahntes Wirbelwerkzeug angeordnet ist, wobei der Antrieb ein elektromagnetischer rotatorischer Direktantrieb (5) ist, umfassend einen an dem Gehäuse (10) befestigten ringförmigen Stator (51) mit im Wesentlichen U-förmigen Querschnit, **dadurch gekennzeichnet, dass** der Direktantrieb (5) einen in Form eines ringförmigen und mit Permanentmagneten versehenen, an der Aufnahme (12) angeformten Steges ausgebildeten Rotor (52) umfaßf, der innerhalb des U-förmigen Querschnitts des Stators (51) gehäuseseitig gelagert ist, wobei der Stator (51) an seinem dem Gehäuse (10) gegenüberliegenden Innenschenkel seines U-förmigen Querschnitts mit einer Wicklung (53) zur Erzeugung eines elektromagnetischen Feldes versehen ist.

2. Vorrichtung nach Anspruch 1, **dadurch gekennzeichnet, dass** an dem Innenschenkel des U-förmigen Querschnitts des Stators (51) wenigstens eine Nut (510) eingebracht ist, in die ein an der Aufnahme (12) angeformter Führungssteg (14) eingreift.

3. Vorrichtung nach einem der vorgenannten Ansprüche, **dadurch gekennzeichnet, dass** der in Form eines an der Aufnahme (12) angeformten Steges gebildete Rotor (52) im Wesentlichen am äußeren Umfang der Aufnahme (12) angeordnet ist.

4. Vorrichtung nach einem der vorgenannten Ansprüche, **dadurch gekennzeichnet, dass** der Stator (51) an seiner der Aufnahme (12) zugewandten Seite einen in Richtung der Rotationsachse der Aufnahme (12) gerichteten Vorsprung (513) aufweist, der sich nahezu bis zum Außenumfang der Aufnahme (12) erstreckt.

5. Vorrichtung nach einem der vorgenannten Ansprüche, **dadurch gekennzeichnet, dass** an dem Stator (51) wenigstens ein Kanal zur Durchleitung von Kühlmittel angeordnet ist.

6. Vorrichtung nach einem der vorgenannten Ansprüche, **dadurch gekennzeichnet, dass** die Aufnahme (12) des Wirbelaggregats (1) Indexierstifte umfasst, die mit in dem Wirbelwerkzeug (4) vorhandenen Indexierbohrungen (42) korrespondieren.

## Claims

1. Metal-cutting device for machining tubular and rod-shaped workpieces by means of the vortex separation prowess, comprising a vortex assembly with a housing on which a retainer for an annular-toothed vortex tool is mounted rotatably and connected with a drive system, where the drive system is an electromagnetic rotating direct-drive system (5) comprising a ring-shaped stator (51) with a substantially U-shaped cross-section attached to the housing (10), **characterised in that** the direct-drive system (5) comprises a rotor (52) in the shape of an annular ridge moulded onto the retainer (12) and fitted with permanent magnets, which is mounted on the housing side inside the U-shaped cross-section of the stator (51), where the stator (51) is fitted on the inside leg of its u-shaped cross-section opposite the housing (10) with a coil (53) for generating an electromagnetic field.

2. Device according to claim 1, **characterised in that** there is at least one groove (510) on the inside leg of the U-shaped cross-section of the stator (51), into which a guide ridge (14) moulded onto the retainer (12) engages.

3. Device according to either of the above claims, **characterised in that** the rotor (52) in the form of a ridge moulded onto the retainer (12) is arranged mainly on the outer circumference of the retainer (12).

4. Device according to any of the above claims, **characterised in that** the stator (51), on the side closest to the retainer (12), has a protection (513) pointing towards the axis of rotation of the retainer (12) which extends almost to the outer circumference of the retainer (12).

5. Device according to any of the above claims, **characterised in that** at least one duct for the passage of coolant is arranged on the stator (51).

6. Device according to any of the above claims, **characterised in that** the retainer (12) of the vortex assembly (1) has indexing pins which correspond to the indexing holes (42) in the vortex tool (4).

## Revendications

1. Dispositif d'usinage, par enlèvement de copeaux, de pièces en forme de tubes et de barres selon un procédé tourbillonnant, comprenant un groupe tourbillonnant présentant un carter, groupe contre lequel est agencé un réceptacle sur appui tournant relié à un entraînement et destiné à un outil tourbillonnant à denture intérieure, sachant que l'entraînement est un entraînement direct (5) rotatif électromagnétique comprenant un stator (51) annulaire fixé contre le carter (10) et présentant une section essentiellement en U, **caractérisé en ce que** l'entraînement direct (5) comprend un rotor (52) configuré en forme de nervure annulaire et dotée d'aimants permanents, moulée contre le réceptacle (12), rotor qui côté carter prend appui à l'intérieur de la section en U du stator (51), sachant que le stator (51) est doté, contre la branche intérieure de sa section en U située en face du carter (10), d'un bobinage (53) servant à générer un champ électromagnétique.

2. Dispositif selon la revendication 1, **caractérisé en ce que** contre la branche intérieure de la section en U du stator (51) a été ménagée au moins une gorge (510) dans laquelle engrène une nervure de guidage (14) moulée contre le réceptacle (12).

3. Dispositif selon l'une des revendications précédentes, **caractérisé en ce que** le rotor (52) configuré en forme de nervure moulée contre le réceptacle (12) est agencé essentiellement sur la circonférence extérieure du réceptacle (12).

4. Dispositif selon l'une des revendications précédentes, **caractérisé en ce que** le stator (51) présente, sur son côté tourné vers le réceptacle (12), une saillie (513) regardant en direction de l'axe de rotation du réceptacle (12), saillie qui s'étend presque jusqu'à la circonférence extérieure du réceptacle (12).

5. Dispositif selon l'une des revendications précédentes, **caractérisé en ce que** contre le stator (51) est agencé au moins un conduit servant à faire passer du liquide d'arrosage.

6. Dispositif selon l'une des revendications précédentes, **caractérisé en ce que** le réceptacle (12) du groupe tourbillonnant (1) comprend des tiges d'indexage qui épousent des alésages d'indexage (42) ménagés dans l'outil tourbillonnant (4).
